Europäisches Patentamt

European Patent Office

Office européen des brevets

(19)

(11) Veröffentlichungsnummer: **0 277 300 B1**

# EUROPÄISCHE PATENTSCHRIFT

(12)

(45) Veröffentlichungstag der Patentschrift:
31.10.90

(21) Anmeldenummer: **87117423.1**

(22) Anmeldetag: **26.11.87**

(51) Int. Cl.⁵: **C02F 1/40**, B01D 17/02,
C02F 9/00

(54) **Vorrichtung zur Reinigung und Neutralisation von Rückständen aus Feuerungen.**

(30) Priorität: **22.01.87 DE 8700987 U**

(43) Veröffentlichungstag der Anmeldung:
**10.08.88 Patentblatt 88/32**

(45) Bekanntmachung des Hinweises auf die Patenterteilung:
**31.10.90 Patentblatt 90/44**

(84) Benannte Vertragsstaaten:
**AT BE CH DE FR GB IT LI LU NL SE**

(56) Entgegenhaltungen:
**EP-A- 0 162 195
DE-A- 1 813 886
DE-A- 2 306 916
GB-A- 1 566 172
US-A- 3 471 401**

(73) Patentinhaber: **Bommer, Rolf,
Reichlin-von-Meldegg-Strasse 4, D-7770 Überlingen am
Bodensee(DE)**

(72) Erfinder: **Bommer, Rolf,
Reichlin-von-Meldegg-Strasse 4, D-7770 Überlingen am
Bodensee(DE)**

(74) Vertreter: **Patentanwälte Dipl.-Ing. Klaus Westphal Dr.
rer. nat. Bernd Mussgnug Dr. rer.nat. Otto Buchner,
Waldstrasse 33, D-7730 VS-Villingen-Schwenningen(DE)**

## Beschreibung

Die Erfindung betrifft eine Vorrichtung zur Reinigung und Neutralisation von Rückständen aus Feuerungen mit flüssigen oder gasförmigen Brennstoffen, insbesondere aus Brennwertkesseln.

Bei Heizkesseln, die als Brennwertkessel bezeichnet werden, werden die Rauchgase der Feuerung unter den Taupunkt abgekühlt, so daß der in den Rauchgasen enthaltene Wasserdampf kondensiert und sich zusammen mit den in den Rauchgasen enthaltenen Schadstoffen und sonstigen Verbrennungsrückständen niederschlägt. Dieses Kondensat enthält aufgrund des in den fossilen flüssigen oder gasförmigen Brennstoffen vorhandenen Schwefels Schwefeloxide und ist daher stark sauer.

Aus EP-A 0 162 195 ist eine Vorrichtung zur Neutralisation der Rauchkondensate eines Brennwertkessels bekannt, bei welcher die Kondensate in einem Durchlaufbehälter nacheinander eine Quarzkies-Schicht, eine Axtivkohle-Schicht und eine Magnesiumoxid/Magnesiumkarbonat-Schicht durchließen. Die Quarzkies-Schicht verteilt das Kondensat fein und gleichmäßig und reinigt dieses auch in geringem Maße mechanisch. In der Aktivkohle-Schicht werden die in Kondensat befindlichen Kohlenwasserstoffe adsorbiert. Das Magnesiumoxid-/Magnesiumkarbonat neutralisiert das saure Kondensat, das dann in die Kanalisation geleitet werden kann. Die Quarzkies-Schicht setzt sich während der Benutzung zu, während die Aktivkohle-Schicht und die Magnesiumoxid-Schicht verbraucht werden. Daher sind die drei Schichten in einer gemeinsamen auswechselbaren Patrone angeordnet. Die Stärke der einzelnen Schichten in diesen Patronen ist vorgegeben, so daß eine individuelle Anpassung an die Bedingungen der jeweiligen Feuerung nicht möglich ist. Eine getrennte Einflußnahme auf die Kondensatflüssigkeit in den verschiedenen Stufen der Reinigung und Neutralisation ist nicht möglich.

Der Erfindung liegt die Aufgabe zugrunde, eine Vorrichtung zur Reinigung und Neutralisation von Feuerungsrückständen zu schaffen, die eine flexible Behandlung der Kondensatflüssigkeit in allen Stufen der Reinigung und Neutralisation ermöglicht.

Diese Aufgabe wird bei einer Vorrichtung der eingangs genannten Gattung erfindungsgemäß gelöst durch die Merkmale des kennzeichnenden Teiles des Anspruchs 1.

Vorteilhafte Ausführungsformen der Erfindung sind in den abhängigen Ansprüchen angegeben.

Die erfindungsgemäße Vorrichtung arbeitet in zwei Stufen. Zunächst wird das in dem Heizungskessel anfallende Kondensat bzw. das bei der nassen Reinigung des Heizungskessels anfallende Reinigungswasser über eine Wasservorlage in einen Absetzbehälter geleitet. In dem Absetzbehälter steht das Wasser, so daß sich die in dem Wasser enthaltenen schwereren Teilchen, wie Asche und Ruß absetzen können. Die in dem Wasser enthaltenen unverbrannten Öltröpfchen sammeln sich an der Oberfläche. Die Öltröpfchen werden durch Ölaufsaugkörper aufgenommen, die aus einem an sich bekannten Material bestehen, wie es z.B. in der DE-C 2 306 916 beschrieben ist. Die Ölaufsaugkörper können als Würfel oder Kugeln auf der Oberfläche des Wassers in dem Absetzbehälter schwimmen oder können als Platte oder in sonstiger Weise geformter Körper in das Wasser, insbesondere in dessen obere Schicht eingebracht werden. Der sich am Boden des Absetzbehälters absetzende Schlamm der schwereren Teilchen kann vorzugsweise über eine Entleerungsöffnung entfernt werden. Das auf diese Weise von Öl und Feststoffteilchen weitestgehend gereinigte Wasser gelangt durch einen Filter in einen Reinwasserbehälter. Der Filter ist vorzugsweise als Filterplatte ausgebildet, die den Absetzbehälter und den Reinwasserbehälter voneinander trennt. Die Filterplatte besteht vorzugsweise aus einem wasserdurchlässigen Kunststoff-Hartschaum, insbesondere aus einem offenzelligen Polyurethan-Schaum. Dieser Filter läßt das Wasser mit den noch darin enthaltenen gelösten Stoffen durchtreten, hält aber Öltröpfchen und Feststoffe zuverlässig zurück.

In dem Reinwasserbehälter wird der pH-Wert des Wassers auf einen zulässigen Wert angehoben, wozu vorzugsweise Marmorgranulat verwendet wird oder eine basische Flüssigkeit in dosierter Menge zugeführt wird. Das auf diese Weise neutralisierte Wasser gelangt aus dem Reinwasserbehälter über einen Aktivkohlefilter in die Kanalisation. In dem Aktivkohlefilter werden im wesentlichen die noch in dem Wasser enthaltenen gelösten und ungelösten Kohlenwasserstoffe aufgenommen. Das in die Kanalisation gelangende Wasser hat somit Trinkwasserqualität.

In dem Absetzbehälter ist vorzugsweise ein Schwimmerschalter vorgesehen, der den Brenner der Feuerung abschaltet, wenn der Flüssigkeitspegel in dem Absetzbehälter zu hoch ansteigt, so daß die Vorrichtung kein weiteres Kondensat aufnehmen kann.

Das neutralisierte Wasser des Reinwasserbehälters kann zusätzlich abgepumpt und zur Rauchgasentschwefelung einem Rauchgaswäscher zugeführt werden. Das durch die Rauchgasentschwefelung wieder saure Waschwasser wird erneut in die Reinigungsvorrichtung zurückgeführt. Um in diesem Falle in dem Reinwasserbehälter stets eine für die Rauchgasentschwefelung ausreichende Wassermenge zu gewährleisten, ist in dem Reinwasserbehälter ebenfalls ein Schwimmerschalter vorgesehen, der eine Frischwasserzufuhr steuert und einen ausreichenden Wasserpegel in dem Reinwasserbehälter sicherstellt.

Da der Rauchgaswäscher einen verhältnismäßig großen Wasserdurchsatz benötigt, wird in diesem Falle in einem bevorzugten Ausführungsbeispiel das Anheben des pH-Wertes durch zwei getrennte Marmorgranulat-Behälter bewirkt. Über einen ersten Marmorgranulat-Behälter mit hohem Wasserdurchsatz wird das Wasser zu dem Rauchgaswäscher abgepumpt. Aufgrund des hohen Wasserdurchsatzes ergibt sich keine vollständige Neutralisation, sondern das dem Rauchgaswäscher zugeführte Wasser weist noch einen pH-Wert von ca. 5 bis 6 auf. Für den Betrieb des Rauchgaswäschers eignet sich dieses leicht saure Waschwasser ausreichend. Das aus dem Rauchgaswäscher austretende stark saure Waschwasser wird wieder der Reinigungsvorrichtung zugeführt.

Über einen zweiten Marmorgranulat-Behälter mit geringem Wasserdurchsatz wird das Wasser aus dem Reinwasserbehälter über den Aktivkohlefilter in die Kanalisation geleitet. Über den zweiten Marmorgranulat-Behälter und den Aktivkohlefilter fließt nur die Überlaufmenge des Wassers aus dem Reinwasserbehälter, die durch das ständig anfallende Kondensat erzeugt wird. Nur diese wesentlich geringere Überlaufmenge von z.B. 0,6 kg pro Liter Heizöl belastet den Aktivkohlefilter, so daß dieser nur selten ausgewechselt werden muß. Die geringe Überlaufmenge bewirkt einen geringen Wasserdurchsatz durch das Marmorgranulat, so daß eine längere Kontaktzeit zwischen dem Wasser und dem Marmorgranulat möglich ist und der pH-Wert auf 6,5 bis 7,0 angehoben wird. Das Wasser kann somit bedenkenlos in die Kanalisation geleitet werden.

Mit dem erfindungsgemäß anfallenden Waschwasser kann ein äusserst einfach aufgebauter Rauchgaswäscher betrieben werden. Dieser besteht aus einem in ein von den Rauchgasen durchströmtes Rohr eingesetzten gasdurchlässigen Gitter, auf welchen keramische Füllkörper geschichtet sind, durch welche das Waschwasser verrieselt wird. Der Rauchgaswäscher kann zusätzlich noch als Schalldämpfer ausgebildet sein.

Im folgenden wird die Erfindung anhand von in der Zeichnung dargestellten Ausführungsbeispielen näher erläutert. Es zeigen

Figur 1 - eine schematische Schnittdarstellung der Vorrichtung in einer ersten Ausführung,

Figur 2 - einen Schnitt durch den Aktivkohlefilter dieser Vorrichtung,

Figur 3 - einen Schnitt gemäß der Linie A-A in Figur 1 in einer zweiten Ausführung der Vorrichtung,

Figur 4 - einen vertikalen Axialschnitt durch einen Rauchgaswäscher,

Figur 5 - einen vertikalen Axialschnitt durch eine abgewandelte Ausführungsform des Rauchgaswäschers und

Figur 6 - einen vertikalen Schnitt durch eine dritte Ausführung der Vorrichtung.

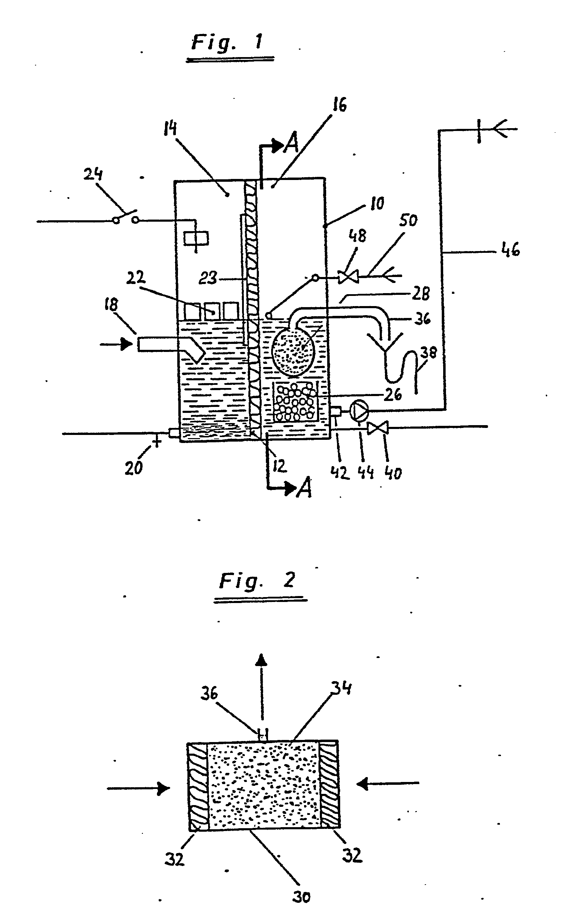

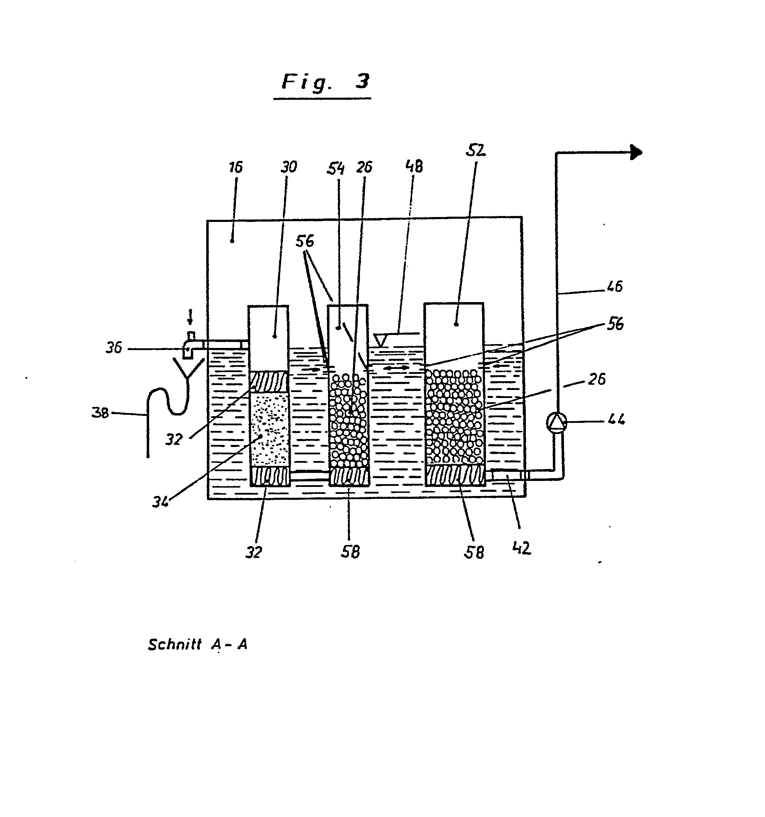

Die Vorrichtung weist in der Ausführung der Figur 1 und 3 einen quaderförmigen Behälter 10 auf, der durch eine Filterplatte 12 in einen Absetzbehälter 14 und einen Reinwasserbehälter 16 getrennt ist. Die Filterplatte 12 besteht aus einem offenzelligen Polyurethan-Schaum, der wasserdurchlässig ist, jedoch Öltröpfchen und Feststoffbestandteile nicht durchtreten läßt.

In den Absetzbehälter 14 führt ein Zulauf 18, durch den das Kondensat des Heizungskessels über eine Wasservorlage und das Reinigungswasser der nassen Kesselreinigung zugeführt werden. Am Boden des Absetzbehälters 14 ist eine Entleerungsöffnung 20 vorgesehen, durch welche der sich absetzende Feststoffschlamm entfernt werden kann. Weiter sind in dem Absetzbehälter 14 Ölaufsaugkörper 22 vorgesehen, die auf der Oberfläche der Flüssigkeit in dem Absetzbehälter schwimmen. Die Ölaufsaugkörper 22 können als Würfel frei auf der Oberfläche der Flüssigkeit schwimmen oder in Form kleinerer Körper oder Kugeln in einem netzförmigen Kissen zusammengefaßt sein. Anstelle der auf der Oberfläche schwimmenden Ölaufsaugkörper 22 kann auch eine ölaufsaugende Platte 23 vorgesehen sein, die an der Filterplatte 12 anliegend befestigt wird. Die ölaufsaugende Platte 23 ragt mit ihrem unteren Ende in die Flüssigkeit ein, um das sich an der Flüssigkeitsoberfläche ansammelnde Öl aufzusaugen, läßt aber den größten Teil der unter dem Flüssigkeitsspiegel liegenden Fläche der Filterplatte 12 für den Flüssigkeitsdurchtritt frei.

Unterhalb des oberen Randes des Absetzbehälters 14 ist ein Schwimmerschalter 24 angeordnet, der den Brenner der Feuerung ausschaltet, wenn der Flüssigkeitsspiegel in der Absetzkammer 14 bis an den oberen Rand des Behälters 10 ansteigt, so daß die Vorrichtung kein weiteres Wasser mehr aufnehmen kann.

In dem in Figur 1 dargestellten ersten Ausführungsbeispiel ist in dem Reinwasserbehälter 16 in einem Korb Marmorgranulat 26 zur Anhebung des pH-Wertes vorgesehen. Weiter ist in dem Reinwasserbehälter 16 ein Aktivkohlefilter 28 angeordnet, der in Figur 2 im Vertikalschnitt gesondert dargestellt ist. Der Aktivkohlefilter 28 besteht aus einem dosenförmigen Gehäuse 30, dessen Seitenwände 32 aus einem wasserdurchlässigen Kunststoff-Hartschaum, vorzugsweise ebenfalls aus einem offenzelligen Polyurethan-Schaum bestehen. Das Gehäuse 30 nimmt die Aktivkohle 34 auf. Das durch die Seitenwände 32 eindringende Wasser wird in der Aktivkohle 34 gereinigt, wobei insbesondere die gelösten und ungelösten Kohlenwasserstoffe aufgenommen werden, und tritt über einen Ablauf 36 aus dem Aktivkohlefilter 28 und aus dem Reinwasserbehälter 16 aus und gelangt in einen Kanalanschluß 38.

Über ein Absperrorgan 40 kann das Wasseraus dem Behälter 10 abgelassen werden.

Schließlich weist der Reinwasserbehälter 16 noch einen Auslaß 42 auf, über welchen mittels einer Pumpe 44 Wasser zu einem Rauchgaswäscher 46 gepumpt werden kann. Ein in dem Reinwasserbehälter 16 angeordneter weiterer Schwimmerschalter 48 steuert eine Frischwasserzufuhr 50, so daß gewährleistet ist, daß in dem Reinwasserbehälter 16 stets ein ausreichender Wasservorrat für den Rauchgaswäscher 46 vorhanden ist.

Die Filterplatte 12, die Ölaufsaugkörper bzw. die Ölaufsaugplatte 23, das Marmorgranulat 26 und der Aktivkohlefilter 28 sind selbstverständlich austauschbar, so daß sie bei Bedarf erneuert werden können.

In dem Ausführungsbeispiel der Figur 3 sind in dem Reinwasserbehälter 16 zwei mit Marmorgranulat 26 gefüllte Behälter 52 und 54 angeordnet. Die z.B. zylindrischen Behälter 52 und 54 weisen in ihrem oberen Bereich unterhalb des durch den Ablauf 36 bestimmten Flüssigkeitsspiegel Eintrittsöffnungen 56 für die Flüssigkeit auf.

Unten in dem Behälter 52, der einen verhältnismäßig großen Querschnitt aufweist, mündet der Auslaß 42, durch welchen mittels der Pumpe 44 das Wasser zu dem Rauchgaswäscher 46 abgeführt wird. Eine Filterschicht 58 z.B. aus wasserdurchlässigem Kunststoff-Hartschaum, wie z.B. aus offenzelligem Polyurethan-Schaum,verhindert, daß das Marmorgranulat 26 in den Auslaß 42 eintritt.

Der zweite Behälter 54 weist einen geringeren Querschnitt auf, und steht über ein bodennah mündendes Rohr mit einem Gehäuse 30 in Verbindung, welches den durch die Seitenwände 32 abgeschlossenen Aktivkohlefilter 28 aufnimmt. In einer den Flüssigkeitspegel in dem Reinwasserbehälter 16 bestimmenden Höhe tritt der Ablauf 36 aus dem Gehäuse 30 aus und führt zu dem belüfteten Kanalanschluß 38.

Das durch die Filterplatte 12 in den Reinwasserbehälter 16 eintretende Wasser tritt durch die Eintrittsöffnungen 56 in den Marmorgranulat-Behälter 52 und wird mittels der Pumpe 44 zu dem Rauchgaswäscher 46 befördert. Von dem Rauchgaswäscher 46 strömt das Wasser wieder zurück zu dem Zulauf 18 des Absetzbehälters. Das mittels der Pumpe 44 mit einem verhältnismäßig großen Durchsatz von ca. 300 Liter/Stunde durch den Rauchgaswäscher 46 gepumpte Wasser wird somit vollständig wieder in die Vorrichtung zurückgeführt, so daß sich der Flüssigkeitspegel in der Vorrichtung hierdurch praktisch nicht ändert. Aufgrund des durch die Pumpe 44 und den Querschnitt des Marmorgranulat-Behälters 52 bedingten schnellen Durchströmens des Wassers durch das Marmorgranulat 26 wird der pH-Wert des Wassers beim Durchtritt durch den Marmorgranulat-Behälter 52 auf etwa 5 bis 6 angehoben. Im Rauchgaswäscher 46 nimmt das Waschwasser wieder Schwefeloxide auf, so daß es wieder mit einem wesentlich niedrigerem pH-Wert in den Absetzbehälter und den Reinwasserbehälter 16 zurückströmt.

Die saure Flüssigkeit in dem Reinwasserbehälter 16 tritt ausserdem auch durch die Eintrittsöffnung 56 in den Marmorgranulat-Behälter 54. Wenn der Flüssigkeitspegel in dem Reinwasserbehälter 16 über die Höhe des Ablaufs 36 ansteigt, fließt das Wasser durch das Marmorgranulat 26 des Behälters 54 und den Aktivkohlefilter 28 über den Ablauf 36 in die Kanalisation. Da der Behälter 54 einen geringeren Durchmesser aufweist und die Flüssigkeit durch den Ablauf 36 nicht abgepumpt wird, ergibt sich eine größere Kontaktzeit zwischen dem Wasser und dem Marmorgranulat 26 in dem Behälter 54, so daß der pH-Wert der Flüssigkeit stärker angehoben wird und das Wasser aus dem Ablauf 36 mit einem pH-Wert von etwa 6,5 bis 7,0 in die Kanalisation gelangt.

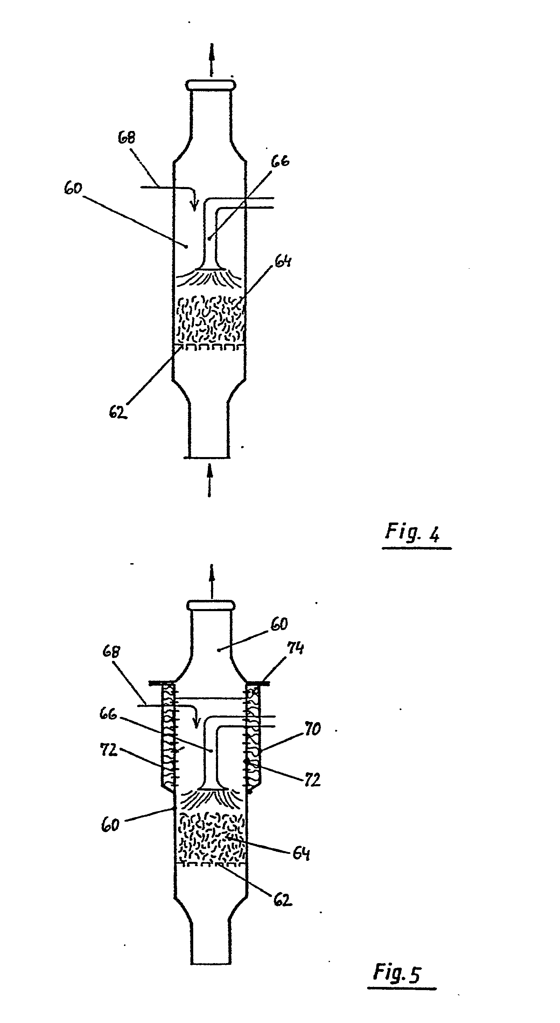

Ein Rauchgaswäscher 46, wie er vorzugsweise eingesetzt wird, ist in Figur 4 dargestellt. Der Rauchgaswäscher 46 weist ein Rohr 60 auf, durch welches die Rauchgase vertikal von unten nach oben hindurchgeführt werden. In das Rohr ist ein gasdurchlässiges horizontales Gitter 62 eingesetzt, das eine Maschenweite von ca 12 bis 15 mm aufweist. Auf das Gitter 62 sind keramische Füllkörper 64 in einer Höhe von ca. 100 bis 150 mm aufgeschüttet. Das Waschwasser wird über einen Wassereinlauf 66 in eine Menge von vorzugsweise ca. 300 Liter/Stunde von oben über die Füllkörper 64 gepumpt und in diesen verrieselt. Ein zusätzlicher Frischwassereinlauf 68 tritt in Funktion, wenn der Kondensatanfall nicht ausreicht, um genügend Waschwasser über die Pumpe 44 zuzuführen.

Der Rauchgaswäscher dient zu Auswaschung von Schwefeldioxid, Rußteilchen, Staub, Asche und anderen ölspezifischen Rückständen aus den Rauchgasen. Das unten aus dem Rauchgaswäscher 46 austretende Waschwasser wird der Vorrichtung über den Zulauf 18 wieder zugeführt.

Die aufgeschütteten keramischen Füllkörper 64 erzeugen nur einen geringen Strömungswiderstand für die Rauchgase, der einen Druckabfall von etwa 1 bis 4 mm WS erzeugt. Dies wird dadurch begünstigt, daß das Rohr 60 auf einen Durchmesser von 150 bis 180 mm gegenüber dem Rauchgasrohr mit einem Durchmesser von etwa 80 bis 100 mm erweitert ist. Das obere Ende des Rauchgaswäschers 46 wird an das zum Kamin führende Rauchgasrohr gasdicht angeschlossen.

In dem Ausführungsbeispiel der Figur 5 ist das Rohr 60 des Rauchgaswäschers 46 in seinem oberen Bereich von einem korrosionsfesten Rohr 70 größeren Durchmessers umschlossen, das unten dicht mit dem Rohr 60 verbunden ist. Das Rohr 60 des Rauchgaswäschers ist im Bereich des Aussenrohrs 70 mit Bohrungen 72 versehen. Der Zwischenraum zwischen den Rohren 60 und 70 ist mit einem säurebeständigen, vorzugsweise keramischen Isoliermaterial 74 ausgestopft. Durch diese Ausbildung wirkt der Rauchgaswäscher 46 gleichzeitig als Schalldämpfer.

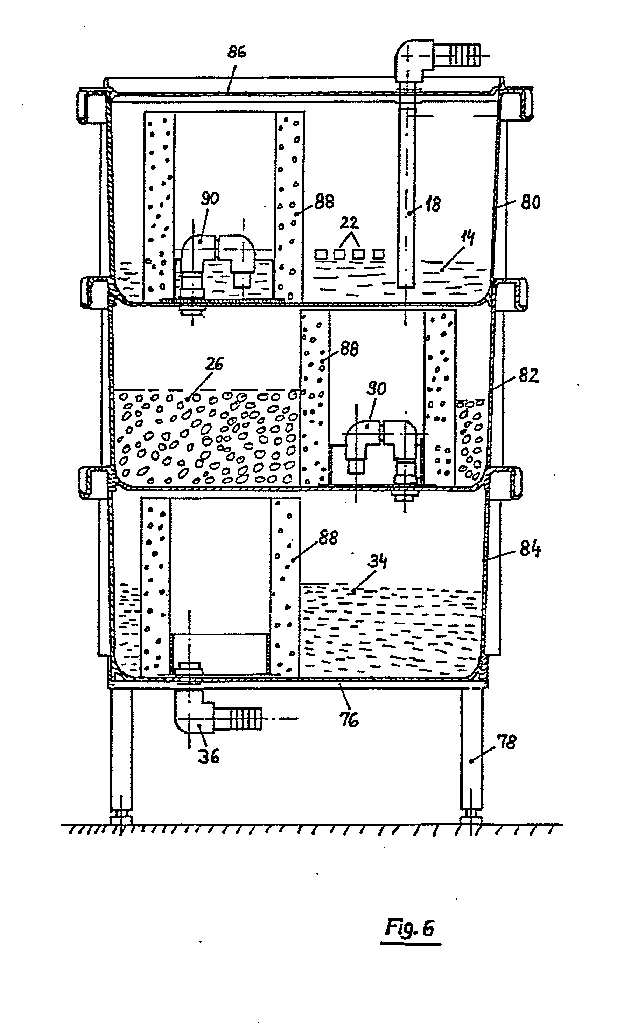

Figur 6 zeigt eine Ausführungsform der Vorrichtung, die sich in der Praxis bewährt hat und sich durch einen besonders einfachen und kompakten Aufbau auszeichnet.

Ein Gestell bestehend aus einem Rahmen 76 und vier Füßen 78 aus Vierkant-Stahlrohr, trägt drei gestapelt aufeinandergesetzte quaderförmige Kunststoffbehälter 80, 82 und 84. In den oberen Behälter 80, der durch einen Deckel 86 verschlossen wird, führt senkrecht von oben der Zulauf 18. Der obere Behälter 80 dient als Absetzbehälter 14 und nimmt die Ölaufsaugkörper 22 auf. In den Behälter 80 ist ein zylindrischer Einsatz 88 eingesetzt, der der Filterplatte 12 der vorhergehenden Ausführungen entspricht und wie diese aus einem offenzelligen Polyurethan-Schaum besteht. Der Einsatz 88 umschließt einen Überlauf 90, der zu dem mittleren Behälter 82 führt. Das über den Zulauf 18 zugeführte Kondensat bzw. Reinigungswasser steht in dem oberen Behälter 80 in der durch den Überlauf 90 bestimmten Höhe. Festkörperbestandteile setzen sich in dem oberen Behälter 80 ab. Ölbestandteile werden durch die Ölaufsaugkörper 22 aufgenommen. Durch den Einsatz 88 gefiltert gelangt die Flüssigkeit über den Überlauf 90 in den mittleren Behälter 82. Der mittlere Behälter 82 ist mit dem Marmorgranulat 26 gefüllt. Auch der mittlere Behälter 82 weist einen Einsatz 88 aus offenzelligem Polyurethan-Schaum auf, der einen Überlauf 90 umschließt. Die von dem oberen Behälter 80 kommende Flüssigkeit steht in dem mittleren Behälter 82 in der durch den Überlauf 90 bestimmten Höhe und wird durch das Marmorgranulat 26 neutralisiert. Über den Überlauf 90 gelangt die gefilterte und neutralisierte Flüssigkeit in den unteren Behälter 84, der mit der Aktivkohle 34 gefüllt ist. Auch in dem unteren Behälter 84 ist ein zylindrischer Einsatz 88 aus Polyurethan-Schaum eingesetzt, der den Ablauf 36 umschließt. In dem unteren Behälter 84 werden die in dem gereinigten und neutralisierten Kondensat noch vorhandenen organischen Substanzen wie insbesondere Kohlenwasserstoffe gebunden.

Auch bei der Ausführung der Figur 6 kann im Bedarfsfall ein Rauchgaswäscher angeschlossen werden. In diesem Falle wäre die Anschlußleitung für den Rauchgaswäscher an dem mittleren Behälter 82 unterhalb der Höhe des Überlaufes 90 angeordnet, so daß nur ein geringer Überschuß des Kondensats über den unteren Behälter 84 in den Ablauf 36 gelangt.

Am Boden des mittleren Behälters 82 kann gegebenenfalls eine Schlauch- oder Rohrleitung mit Austrittsöffnungen vorgesehen sein, durch welche Wasser unter Druck eingeleitet werden kann, um das Marmorgranulat 26 rückzuspülen. Durch die Rückspülung wird die Schicht des Marmorgranulats 26 gelockert und gereinigt, so daß die aktive Oberfläche des Marmorgranulat regeneriert wird.

**Patentansprüche**

1. Vorrichtung zur Reinigung und Neutralisation von Rückständen aus Feuerungen mit flüssigen oder gasförmigen Brennstoffen, insbesondere aus Brennwertkesseln, gekennzeichnet durch einen Absetzbehälter (14, 80) mit einem Zulauf (18) für die die Rückstände enthaltende Flüssigkeit, durch mindestens einen in dem Absetzbehälter (14, 80) angeordneten Ölaufsaugkörper (22, 23), durch einen mittels eines Filters von dem Absetzbehälter (14, 80) getrennten Reinwasserbehälter (16, 82), durch eine in dem Reinwasserbehälter (16, 82) angeordnete Einrichtung zur Anhebung des pH-Wertes und durch eine Aktivkohle (34) enthaltende Filtereinrichtung zwischen dem Reinwasserbehälter (16, 82) und einem Ablauf (36).

2. Vorrichtung nach Anspruch 1, dadurch gekennzeichnet, daß der Filter eine zwischen den Absetzbehälter (14) und den Reinwasserbehälter (16) eingesetzte Filterplatte (12) ist.

3. Vorrichtung nach Anspruch 1, dadurch gekennzeichnet, daß der Filter ein in dem Absetzbehälter (80) angeordneter Einsatz (88) ist, der einen Überlauf (90) zu dem Reinwasserbehälter (82) umschließt.

4. Vorrichtung nach Anspruch 2 oder 3, dadurch gekennzeichnet, daß der Filter (12 bzw. 88) aus einem wasserdurchlässigen Kunststoff-Hartschaum, insbesondere aus einem offenzelligen Polyurethan-Schaum besteht.

5. Vorrichtung nach einem der Ansprüche 1 bis 4, dadurch gekennzeichnet, daß die Ölaufsaugkörper (22) in dem Absetzbehälter (14, 80) frei auf der Oberfläche schwimmen.

6. Vorrichtung nach Anspruch 2, dadurch gekennzeichnet, daß der Ölaufsaugkörper als Platte (23) an der Filterplatte (12) anliegend angeordnet ist.

7. Vorrichtung nach Anspruch 1, dadurch gekennzeichnet, daß der Absetzbehälter (14) eine bodennahe Entleerungsöffnung (20) aufweist.

8. Vorrichtung nach Anspruch 1, dadurch gekennzeichnet, daß der Absetzbehälter (14) einen Schwimmerschalter (24) zum Abschalten der Feuerung enthält.

9. Vorrichtung nach Anspruch 1, dadurch gekennzeichnet, daß die Einrichtung zur Anhebung des pH-Wertes Marmorgranulat (26) ist.

10. Vorrichtung nach Anspruch 1, dadurch gekennzeichnet, daß die Einrichtung zur Anhebung des pH-Wertes ein Dosierzulauf für eine basische Flüssigkeit ist.

11. Vorrichtung nach Anspruch 1, dadurch gekennzeichnet, daß die Aktivkohle enthaltende Filtereinrichtung einen durch eine Filterschicht verschlossenen Wassereintritt aufweist.

12. Vorrichtung nach Anspruch 11, dadurch gekennzeichnet, daß die Filtereinrichtung ein die Aktivkohle (34) aufnehmendes Gehäuse (30) aufweist, dessen Wandung (32) zumindest teilweise aus einem wasserdurchlässigen Kunststoff-Hartschaum, insbesondere aus einem offenzelligen Polyurethan-Schaum besteht.

13. Vorrichtung nach Anspruch 11, dadurch gekennzeichnet, daß die Filtereinrichtung ein mit Aktivkohle (34) gefüllter Behälter (84) ist, und daß in den Reinwasserbehälter (82) ein Filtereinsatz (88) eingesetzt ist, der einen zu dem mit Aktivkohle (34) gefüllten Behälter (84) führenden Überlauf (90) umschließt.

14. Vorrichtung nach Anspruch 1, dadurch gekennzeichnet, daß der Reinwasserbehälter (16) einen mit einer Pumpe (44) versehenen Auslaß (42) zu einem Rauchgaswäscher (46) aufweist.

15. Vorrichtung nach Anspruch 14, dadurch gekennzeichnet, daß der Reinwasserbehälter (16) eine durch einen Schwimmerschalter (48) gesteuerte Frischwasserzufuhr (50) aufweist.

16. Vorrichtung nach Anspruch 14, dadurch gekennzeichnet, daß ein in den Reinwasserbehälter (16) eingesetzter mit Marmorgranulat (26) gefüllter Behälter (52) mit dem Auslaß (42) zu dem Rauchgaswäscher (46) verbunden ist.

17. Vorrichtung nach Anspruch 1, dadurch gekennzeichnet, daß ein in den Reinwasserbehälter (16) eingesetzter mit Marmorgranulat (26) gefüllter Behälter (54) mit der Aktivkohle enthaltenden Filtereinrichtung verbunden ist.

18. Vorrichtung nach Anspruch 16 und 17, dadurch gekennzeichnet, daß beide mit Marmorgranulat (26) gefüllten Behälter (52, 54) in dem Reinwasserbehälter (16) angeordnet sind.

19. Vorrichtung nach Anspruch 1, dadurch gekennzeichnet, daß der Absetzbehälter (80), der das Marmorgranulat enthaltende Reinwasserbehälter (82) und der die Aktivkohle (34) enthaltende Behälter (84) aufeinandergestapelte und jeweils durch einen überlauf (90) miteinander verbundene Kunststoffbehälter sind.

20. Vorrichtung nach Anspruch 14, dadurch gekennzeichnet, daß der Rauchgaswäscher (46) ein vertikales, von den Rauchgasen durchströmtes Rohr (60) aufweist, in welchem auf einem gasdurchlässigen Gitter (62) keramische Füllkörper (64) aufgeschichtet sind, die von Waschwasser von oben durchrieselt werden.

21. Vorrichtung nach Anspruch 20, dadurch gekennzeichnet, daß der Rauchgaswäscher (46) zusätzlich zu dem über die Pumpe (44) mit dem Reinwasserbeälter (16) in Verbindung stehenden Wassereinlauf (66) einen Frischwassereinlauf (68) aufweist.

22. Vorrichtung nach Anspruch 20, dadurch gekennzeichnet, daß das Rohr (60) des Rauchgaswäschers (46) von einem äusseren Rohr (70) umschlossen ist, daß das Rohr (60) des Rauchgaswäschers (46) im Bereich des äusseren Rohrs (70) radiale Bohrungen (72) aufweist und daß der Zwischenraum zwischen dem Rohr (60) und dem äusseren Rohr (70) mit einem vorzugsweise keramischen, säurebeständigen Isoliermaterial (74) ausgestopft ist.

## Claims

1. A device for cleaning and neutralizing residues from furnaces using liquid or gaseous fuels, in particular from water heaters in which vapour in the products of combustion is condensed to retrieve the latent heat of vapourisation, characterized by a settlement container (14, 80) comprising an inlet (18) for the residue-containing fluid, by at least one oil-absorbing element (22, 23) arranged in the settlement container (14, 80), by a clean water container (16, 82) separated from the settlement container (14, 80) by means of a filter, by a means for raising the pH-value located in the clean water container (16, 82), and by a filter device containing active carbon (34) located between the clean water container (16, 82) and a drain (36).

2. A device in accordance with Claim 1, characterized in that the filter is a filter plate (12) installed between the settlement container (14) and the clean water container (16).

3. A device in accordance with Claim 1, characterized in that the filter is an insert (88), arranged in the settlement container (80), and surrounding an overflow (90) to the clean water container (82).

4. A device in accordance with Claim 2 or 3, characterized in that the filter (12 or 88 respectively) consists of a water-permeable rigid plastic foam, in particular an open-celled polyurethane foam.

5. A device in accordance with any one of Claims 1 to 4, characterized in that the oil-absorbing elements (22) float freely on the surface in the settlement container (14, 80).

6. A device in accordance with Claim 2, characterized in that the oil-absorbing element is arranged as a plate (23) resting against the filter plate (12).

7. A device in accordance with Claim 1, characterized in that the settlement container (14) comprises an emptying opening (20) near its base for emptying.

8. A device in accordance with Claim 1, characterized in that the settlement container (14) contains a float switch (24) for switching off the furnace.

9. A device in accordance with Claim 1, characterized in that the means for raising the pH-value consist of marble granules (26).

10. A device in accordance with Claim 1, characterized in that the means for raising the pH-value is a dosing inlet for a basic solution.

11. A device in accordance with Claim 1, characterized in that the filter device containing active carbon comprises a water inlet covered by a filter layer.

12. A device in accordance with Claim 11, characterized in that the filter device comprises a housing (30) which contains the active carbon (34) and the walls (32) of which consist at least partially of a water-permeable rigid plastic foam, in particular an open-celled polyurethane foam.

13. A device in accordance with Claim 11, characterized in that the filter device is a container (84) filled with active carbon (34), and a filter insert (88) is installed in the clean water container (82) which surrounds an overflow (90) leading to the container (84) filled with active carbon (34).

14. A device in accordance with Claim 1, characterized in that the clean water container (16) comprises an outlet (42) provided with a pump (44) and leading to a flue gas washer (46).

15. A device in accordance with Claim 14, characterized in that the clean water container (16) comprises a fresh water supply (50) controlled by a float switch (48).

16. A device in accordance with Claim 14, characterized in that a container (52) filled with marble granules (26) and placed in the clean water container (16) is connected to the outlet to the flue gas washer (46).

17. A device in accordance with Claim 1, characterized in that a container (54) filled with marble granules (26) and placed in the clean water container (16) is connected to the active carbon-containing filter device.

18. A device in accordance with Claims 16 and 17, characterized in that both the containers (52, 54) filled with marble granules (26) are arranged in the clean water container (16).

19. A device in accordance with Claim 1, characterized in that the settlement container (80), the clean water container (82) containing the marble granules (26), and the container (84) containing the active carbon (34) are stacked on one another and are plastic containers connected through overflows (90) to one another.

20. A device in accordance with Claim 14, characterized in that the flue gas washer (46) comprises a vertical pipe (60) through which the flue gases flow and in which ceramic packing elements (64), through which wash water trickles from above, are piled on a gas-permeable screen (62).

21. A device in accordance with Claim 20, characterized in that the flue gas washer (46) comprises, in addition to the water inlet (66) connected through the pump (44) to the clean water container (16), a fresh water inlet (68).

22. A device in accordance with Claim 20, characterized in that the pipe (60) of the flue gas washer (46) is surrounded by an outer pipe (70), the pipe (60) of the flue gas washer (46) comprises radial through holes (72) in the outer pipe (70) region, and the space between the pipe (60) and the outer pipe (70) is stuffed with a preferably ceramic, acid-resisting insulating material (74).

**Revendications**

1. Dispositif pour purifier et neutraliser des résidus provenant de foyers à combustibles liquides ou gazeux, en particulier de chaudières à condensation, caractérisé par un réservoir de décantation (14, 80) comprenant une arrivée (18) pour le liquide qui contient les résidus, par au moins un corps d'absorption du mazout (22, 23) disposé dans le réservoir de décantation (14, 80), par un réservoir d'eau pure (16, 82) séparé du réservoir de décantation (14, 80) au moyen d'un filtre, par un dispositif disposé dans le réservoir d'eau pure (16, 82) pour augmenter la valeur du pH, et par un dispositif de filtrage contenant du charbon actif (34) entre le réservoir d'eau pure (16, 82) et une décharge (36).

2. Dispositif selon la revendication 1, caractérisé par le fait que le filtre est une plaque de filtrage (12) placée entre le réservoir de décantation (14) et le réservoir d'eau pure (16).

3. Dispositif selon la revendication 1, caractérisé par le fait que le filtre est une pièce insérée (88) qui est disposée dans le réservoir de décantation (80) et qui entoure en trop-plein (90) conduisant au réservoir d'eau pure (82).

4. Dispositif selon la revendication 2 ou 3, caractérisé par le fait que le filtre (12 ou 88, respectivement) est constitué par une mousse de matière plastique dure perméable à l'eau, et en particulier par une mousse de polyuréthane à alvéoles ouvertes.

5. Dispositif selon l'une des revendications 1 à 4, caractérisé par le fait que les corps d'absorption du mazout (22) flottent librement sur la surface dans le réservoir de décantation (14, 80).

6. Dispositif selon la revendication 2, caractérisé par le fait que le corps d'absorption du mazout est disposé en reposant sous la forme d'une plaque (23) sur la plaque de filtrage (12).

7. Dispositif selon la revendication 1, caractérisé par le fait que le réservoir de décantation (14) comporte une ouverture de vidange (20) au voisinage du fond.

8. Dispositif selon la revendication 1, caractérisé par le fait que le réservoir de décantation (14) contient un commutateur à flotteur (24) pour arrêter le foyer.

9. Dispositif selon la revendication 1, caractérisé par le fait que le dispositif pour augmenter la valeur du pH est constitué par des granulés de marbre (26).

10. Dispositif selon la revendication 1, caractérisé par le fait que le dispositif pour augmenter la valeur du pH est un doseur d'amenée d'un liquide basique.

11. Dispositif selon la revendication 1, caractérisé par le fait que le dispositif de filtrage qui contient du charbon actif comporte une entrée d'eau fermée par une couche de filtrage.

12. Dispositif selon la revendication 11, caractérisé par le fait que le dispositif de filtrage comporte une enveloppe (30) qui reçoit le charbon actif et dont la paroi (32) est constituée, du moins partiellement, par une mousse de matière plastique dure perméable à l'eau, et en particulier par une mousse de polyuréthane à alvéoles ouvertes.

13. Dispositif selon la revendication 11, caractérisé par le fait que le dispositif de filtrage est un réservoir (84) rempli de charbon actif (34), et par le fait qu'est placée dans le réservoir d'eau pure (82) une pièce insérée de filtrage (88) qui entoure un trop-plein (90) conduisant au réservoir (84) rempli de charbon actif (34).

14. Dispositif selon la revendication 1, caractérisé par le fait que le réservoir d'eau pure (16) comporte une sortie (42) munie d'une pompe (44) et conduisant à un laveur de gaz de fumée (46).

15. Dispositif selon la revendication 14, caractérisé par le fait que le réservoir d'eau pure (16) comporte une arrivée d'eau fraîche (50) commandée par un commutateur à flotteur (48).

16. Dispositif selon la revendication 14, caractérisé par le fait qu'un réservoir (52) placé dans le réservoir d'eau pure (16) et rempli de granulés de marbre (26) est relié à la sortie (42) conduisant au laveur de gaz de fumée (46).

17. Dispositif selon la revendication 1, caractérisé par le fait qu'un réservoir (54) placé dans le réservoir d'eau pure (16) et rempli de granulés de marbre (26) est relié au dispositif de filtrage qui contient du charbon actif.

18. Dispositif selon la revendication 16 et 17, caractérisé par le fait que les deux réservoirs (52, 54) remplis de granulés de marbre (26) sont disposés dans le réservoir d'eau pure (16).

19. Dispositif selon la revendication 1, caractérisé par le fait que le réservoir de décantation (80), le réservoir d'eau pure (82) qui contient les granulés de marbre et le réservoir (84) qui contient le charbon actif (34) sont empilés les uns sur les autres et sont chacun constitués par des réservoirs en matière plastique reliés entre eux par un trop-plein (90).

20. Dispositif selon la revendication 14, caractérisé par le fait que le laveur de gaz de fumée (46) comporte un tube vertical (60) qui est parcouru par les gaz de fumée et dans lequel sont empilés, sur une grille perméable aux gaz (62), des corps de remplissage céramiques (64) à travers lesquels l'eau de lavage ruisselle depuis le haut.

21. Dispositif selon la revendication 20, caractérisé par le fait que le laveur de gaz de fumée (46) comporte une amenée d'eau fraîche (68), en plus de l'arrivée d'eau (66) qui est reliée au réservoir d'eau pure (16) par l'intermédiaire de la pompe (44).

22. Dispositif selon la revendication 20, caractérisé par le fait que le tube (60) du laveur de gaz de fumée (46) est entouré par un tube extérieur (70), par le fait que le tube (60) du laveur de gaz de fumée (46) présente des perçages radiaux (72) dans la région du tube extérieur (70), et par le fait que l'intervalle entre le tube (60) et le tube extérieur (70) est bourré d'un matériau isolant (74) résistant aux acides, de préférence céramique.

## Fig. 1

## Fig. 2

# Fig. 3

Schnitt A - A

_Fig. 4_

_Fig. 5_

_Fig. 6_